# EUROPÄISCHE PATENTSCHRIFT

(11) **EP 3 474 418 B1**
(45) Veröffentlichungstag und Bekanntmachung des Hinweises auf die Patenterteilung: **11.03.2020**
(21) Anmeldenummer: 18185798.8
(22) Anmeldetag: 26.07.2018
(51) Int. Cl.: H02K 5/20, H02K 3/24, H02K 1/20

(54) **ELEKTRISCHE MASCHINE**
ELECTRIC MACHINE
MACHINE ÉLECTRIQUE

(30) Priorität: 23.10.2017 DE 102017218828
(43) Veröffentlichungstag der Anmeldung: 24.04.2019
(73) Patentinhaber: AUDI AG, 85045 Ingolstadt (DE)
(72) Erfinder: Weber, Korbinian, 85049 Ingolstadt (DE); Juris, Peter, 85057 Ingolstadt (DE); Stadler, Florian, 85049 Ingolstadt (DE)

(56) Entgegenhaltungen:
- EP-A1- 3 079 229
- WO-A1-03/084028
- WO-A1-2016/132060
- AT-B- 412 311
- FR-A- 1 349 625
- JP-A- 2004 112 968
- US-A1- 2007 176 499
- US-A1- 2012 025 638
- US-A1- 2017 271 955
- US-B1- 6 300 693
- US-B1- 6 522 036

## Beschreibung

Die Erfindung betrifft eine elektrische Maschine mit einem in einem Maschinengehäuse angeordneten Stator und einem bezüglich des Stators um eine Drehachse drehbar gelagerten Rotor, wobei das Maschinengehäuse wenigstens einen Kühlmitteleinlassanschluss zum Zuführen von Kühlmittel in das Maschinengehäuse und wenigstens einen Kühlmittelauslassanschluss zum Abführen von Kühlmittel aus dem Maschinengehäuse aufweist.

Die elektrische Maschine dient dem Umwandeln von elektrischer Energie in kinetische Energie oder umgekehrt. In ersterem Fall wird die elektrische Maschine als Motor, in letzterem Fall als Generator betrieben. Die elektrische Maschine liegt beispielsweise in Form einer Traktionsmaschine eines Kraftfahrzeugs vor. Entsprechend dient sie dem Antreiben des Kraftfahrzeugs, also dem Bereitstellen eines auf das Antreiben des Kraftfahrzeugs gerichteten Drehmoments. Die elektrische Maschine weist den Stator und den Rotor auf, welche in dem Maschinengehäuse angeordnet sind. Der Rotor ist bezüglich des Stators um die Drehachse drehbar gelagert.

Während des Betriebs der elektrischen Maschine fällt Wärme an, welche vor allem bei elektrischen Maschinen mit hoher Leistungsdichte mittels eines Kühlmittels abgeführt werden muss. Aus diesem Grund weist das Maschinengehäuse den Kühlmitteleinlassanschluss und den Kühlmittelauslassanschluss auf. Durch den Kühlmitteleinlassanschluss kann dem Maschinengehäuse Kühlmittel zugeführt werden. Durch den Kühlmittelauslassanschluss kann hingegen das Kühlmittel aus dem Maschinengehäuse abgeführt werden.

Aus dem Stand der Technik ist beispielsweise die Druckschrift EP 3 054 565 A1 bekannt. Diese betrifft eine Kühlanordnung zum Kühlen von Statorwicklungen eines in einem Generatorgehäuse angeordneten Generatorstators, die eine Vielzahl von axialen Kühlkanälen aufweist, wobei sich ein axialer Kühlkanal zwischen Wicklungen, die an benachbarten Statorzähnen angeordnet sind, erstreckt. Weiterhin ist eine Abdeckvorrichtung vorgesehen, um die axialen Kühlkanäle von einem Luftspalt des Generators zu separieren, wobei eine Axialabdeckung der Abdeckungsvorrichtung wenigstens eine Einlassöffnung aufweist, die den Luftspalt mit einem axialen Kühlkanal verbindet. Schließlich ist eine Strömungseinrichtung vorgesehen, um einen gasförmigen Kühlmittelstrom in den Luftspalt und die axialen Kühlkanäle einzubringen.

Aus dem Stand der Technik sind auch JP2004112968, US2007176499 und US6300693 bekannt.

Es ist Aufgabe der Erfindung, eine elektrische Maschine vorzuschlagen, welche gegenüber bekannten elektrischen Maschinen Vorteile aufweist, insbesondere über eine besonders effektive Kühlung verfügt.

Dies wird erfindungsgemäß mit einer elektrischen Maschine mit den Merkmalen des Anspruchs 1 erreicht. Dabei ist vorgesehen, dass der Kühlmitteleinlassanschluss in einen Verteilerringraum einmündet und von dem Verteilerringraum mehrere Gehäusekühlkanäle ausgehen, die sich in axialer Richtung gesehen über den Stator hinaus erstrecken und auf ihrer dem Verteilerringraum abgewandten Seite strömungstechnisch an Statorkühlkanaleinlässe von in dem Stator ausgebildeten Statorkühlkanälen angeschlossen sind, die den Stator in axialer Richtung vollständig durchgreifen und auf ihrer den Statorkühlkanaleinlässen abgewandten Seite über Statorkühlkanalauslässe an den Kühlmittelauslassanschluss angeschlossen sind.

Das durch den Kühlmitteleinlassanschluss zugeführte Kühlmittel strömt insoweit zunächst in den Verteilerringraum ein und wird von diesem auf mehrere Gehäusekühlkanäle verteilt. Die Gehäusekühlkanäle erstrecken sich in axialer Richtung gesehen ausgehend von dem Verteilerringraum über den Stator hinaus, übergreifen also ein axiales Ende des Stators. Anschließend gelangt das Kühlmittel durch die Statorkühlkanaleinlässe in die Statorkühlkanäle, durchströmt diese in axialer Richtung und tritt nachfolgend durch die Statorkühlkanalauslässe in Richtung des Kühlmittelauslassanschlusses aus den Statorkühlkanälen aus. Die Statorkühlkanäle erstrecken sich in axialer Richtung über den gesamten Stator hinweg, durchgreifen diesen also in axialer Richtung vollständig.

Die insoweit realisierte Kühlung der elektrischen Maschine sorgt sowohl für eine Kühlung des Maschinengehäuses durch das Durchströmen der Gehäusekühlkanäle, welche mit dem Maschinengehäuse in Wärmeübertragungsverbindung stehen oder an beziehungsweise in dem Maschinengehäuse ausgebildet sind, als auch für eine Kühlung des Stators. Hierzu stehen die Statorkühlkanäle in Wärmeübertragungsverbindung mit dem Stator oder sind an beziehungsweise in diesem ausgebildet.

Um eine besonders effektive Kühlung zu bewirken, erstrecken sich die Gehäusekühlkanäle in axialer Richtung ausgehend von dem Verteilerringraum über den Stator hinaus, sodass nachfolgend das die Statorkühlkanäle durchströmende Kühlmittel den Stator in axialer Richtung vollständig durchströmen kann. Der im Längsschnitt in Überdeckung liegende Bereich der Gehäusekühlkanäle weist beispielsweise bezogen auf die Länge des Stators in axialer Richtung bezogen von mindestens 0,5, mindestens 0,6, mindestens 0,7, mindestens 0,75, mindestens 0,8 oder mindestens 0,9 auf. In anderen Worten übergreifen die Gehäusekühlkanäle den Stator größtenteils, wohingegen die Statorkühlkanäle den Stator in axialer Richtung vollständig durchgreifen.

Die Gehäusekühlkanäle verlaufen bevorzugt größtenteils oder sogar vollständig gerade, insbesondere genau in axialer Richtung. Bevorzugt gilt dies ebenfalls für die Statorkühlkanäle. Durch die Gehäusekühlkanäle strömt das Kühlmittel zunächst in eine erste axiale Richtung, wird anschließend umgelenkt und strömt durch die Statorkühlkanäle in eine zweite axiale Richtung, welche der ersten axialen Richtung entgegengesetzt ist. Insoweit strömt das Kühlmittel in entgegengesetzte Richtungen durch das Maschinengehäuse.

Vorzugsweise liegt der Kühlmittelauslassanschluss im Längsschnitt gesehen auf der den Statorkühlkanaleinlässen abgewandten Seite des Kühlmitteleinlassanschlusses. Beispielsweise liegt der Kühlmitteleinlassanschluss in axialer Richtung in Überdeckung mit dem Stator vor, wohingegen der Kühlmittelauslassanschluss in axialer Richtung von dem Stator beabstandet angeordnet ist. Mit einer derartigen Ausgestaltung der elektrischen Maschine wird ein besonders effizienter Wärmeübergang zwischen dem Maschinengehäuse und dem Stator einerseits und dem Kühlmittel andererseits erzielt, sodass auch bei hohen Leistungsdichten der elektrischen Maschine die während des Betriebs der elektrischen Maschine entstehende Wärme effektiv abgeführt werden kann.

Das Vorsehen des Verteilerringraums hat den Vorteil, dass das Kühlmittel gleichmäßig oder zumindest nahezu gleichmäßig auf die Gehäusekühlkanäle aufgeteilt wird. Erfindungsgemäß weisen die Gehäusekühlkanäle hierzu unterschiedliche Strömungswiderstände auf, die in Abhängigkeit von der Strömungsweglänge zwischen dem Kühlmitteleinlassanschluss und dem jeweiligen Gehäusekühlkanal festgelegt wird. Insoweit wird für die elektrische Maschine ein hydraulischer Abgleich realisiert, sodass eine gleichmäßige Kühlung des Maschinengehäuses bewirkt wird und mithin das Auftreten von thermischen Spannungen in diesem minimiert wird.

Eine weitere Ausführungsform der Erfindung sieht vor, dass der Verteilerringraum in einer Gehäusewand des Maschinengehäuses ausgebildet oder von der Gehäusewand begrenzt ist, und/oder dass die Gehäusekühlkanäle in der Gehäusewand ausgebildet oder von der Gehäusewand begrenzt sind. Im Längsschnitt gesehen können der Verteilerringraum beziehungsweise die Gehäusekühlkanäle in radialer Richtung sowohl nach innen als auch nach außen von der Gehäusewand begrenzt werden, sodass sie vollständig in der Gehäusewand ausgebildet sind.

Alternativ ist es selbstverständlich möglich, den Verteilerringraum beziehungsweise die Gehäusekühlkanäle lediglich teilweise unter Verwendung der Gehäusewand auszubilden. Beispielsweise liegen sie in Form von Vertiefungen in der Gehäusewand vor, welche von einer Außenumfangsfläche des Stators verschlossen wird. In diesem Fall sind der Verteilerringraum beziehungsweise die Gehäusekühlkanäle in radialer Richtung gesehen zwischen der Gehäusewand und dem Stator beziehungsweise dem Außenumfang des Stators ausgebildet. Ebenso kann es selbstverständlich vorgesehen sein, dass der Verteilerringraum beziehungsweise die Gehäusekühlkanäle in Form von Vertiefungen in dem Stator ausgebildet sind, welche von einer Innenumfangsfläche der Gehäusewand verschlossen sind. Auch in diesem Fall werden sie von der Gehäusewand und dem Stator gemeinsam ausgebildet.

Eine Weiterbildung der Erfindung sieht vor, dass der Verteilerringraum in Umfangsrichtung durchgehend ausgebildet ist und die Gehäusekühlkanäle über den Umfang des Maschinengehäuses gleichmäßig verteilt aus dem Verteilerringraum ausmünden. Der Verteilerringraum umgreift insoweit den Rotor in Umfangsrichtung vollständig. Dies hat den Vorteil, dass eine besonders gleichmäßige Verteilung des Kühlmittels auf die Gehäusekühlkanäle erreicht wird. Die Gehäusekühlkanäle selbst sind über den Umfang des Maschinengehäuses gleichmäßig verteilt angeordnet, sodass eine gleichmäßige Kühlung des Maschinengehäuses realisiert ist.

Eine besonders bevorzugte weitere Ausführungsform der Erfindung sieht vor, dass die Gehäusekühlkanäle auf ihrer dem Verteilerringraum abgewandten Seite in einen Sammelraum einmünden, von dem die Statorkühlkanäle ausgehen, oder dass jeder der Gehäusekühlkanäle von den anderen Gehäusekühlkanälen strömungstechnisch separat mit einem der Statorkühlkanäle strömungstechnisch verbunden ist. Grundsätzlich können zwei unterschiedliche Ausgestaltungen der elektrischen Maschine unterschieden werden.

In einer ersten Ausführungsform wird das Kühlmittel nach ihrem Austreten aus den Gehäusekühlkanälen zunächst in dem Sammelraum zusammengeführt und erst anschließend auf die Statorkühlkanäle verteilt. Der Sammelraum dient hierbei einer Homogenisierung des Kühlmittels, sodass etwaig bestehende Temperaturunterschiede zwischen dem die Gehäusekühlkanäle durchlaufenden Kühlmittel ausgeglichen werden.

Alternativ kann es in einer zweiten Ausführungsform vorgesehen sein, die Gehäusekühlkanäle strömungstechnisch voneinander separat an die Statorkühlkanäle anzuschließen. Beispielsweise ist also jeweils genau einer der Gehäusekühlkanäle mit genau einem der Statorkühlkanäle strömungstechnisch verbunden. Selbstverständlich können auch mehrere Statorkühlkanäle an jedem der Gehäusekühlkanäle oder umgekehrt mehrere Gehäusekühlkanäle an jeden der Statorkühlkanäle angeschlossen sein. In jedem Fall ist dies jedoch strömungstechnisch separat von den jeweils anderen der Gehäusekühlkanäle realisiert.

Eine weitere bevorzugte Ausführungsform der Erfindung sieht vor, dass die Gehäusekühlkanäle von der Gehäusewand und einem Außenumfang des Stators gemeinsam begrenzt sind. Hierauf wurde vorstehend bereits hingewiesen. Eine derartige Ausgestaltung hat den Vorteil, dass die Gehäusekühlkanäle einfach und kostengünstig hergestellt werden können, weil die Gehäusekühlkanäle lediglich als Vertiefung in der Gehäusewand und/oder dem Stator vorliegen. Die Gehäusekühlkanäle werden hierbei erst bei einer Montage des Stators in dem Maschinengehäuse ausgebildet und sind nachfolgend von der Gehäusewand und dem Stator gemeinsam begrenzt.

Eine Weiterbildung der Erfindung sieht vor, dass der Verteilerringraum in axialer Richtung gesehen in Überdeckung mit dem Stator angeordnet ist. Das Zuführen des Kühlmittels erfolgt also in einem Bereich der elektrischen Maschine beziehungsweise des Maschinengehäuses, der - im Längsschnitt gesehen - im Bereich des Stators liegt. Das in dem Verteilerringraum vorliegende Kühlmittel dient hierbei bereits der Kühlung der elektrischen Maschine, nämlich insbesondere des Maschinengehäuses, jedoch auch des Stators, welcher bevorzugt wärmeübertragend an dem Maschinengehäuse anliegt.

Vorzugsweise weist der Verteilerringraum einen deutlich größeren Durchströmungsquerschnitt auf als der Kühlmitteleinlassanschluss und die Gehäusekühlkanäle. Entsprechend ist die Strömungsgeschwindigkeit des Kühlmittels in dem Verteilerringraum vergleichsweise gering, sodass Turbulenzen, die den Strömungswiderstand vergrößern könnten, vermieden oder zumindest weitgehend vermieden werden. Insbesondere ist ein verlustarmes Einströmen des Kühlmittels in die Gehäusekühlkanäle realisiert.

Eine weitere Ausführungsform der Erfindung sieht vor, dass der Kühlmittelauslassanschluss in axialer Richtung gesehen auf der den Statorkühlkanaleinlässen abgewandten Seite des Stators vorliegt. Das durch das Durchströmen der Gehäusekühlkanäle und der Statorkühlkanäle bereits erwärmte Kühlmittel wird also zunächst von dem Stator fortgeführt, bevor es aus dem Maschinengehäuse abgeführt wird. Hierdurch werden Beeinträchtigungen der Kühlwirkung effektiv vermieden. Zudem ermöglicht die beschriebene Anordnung des Kühlmittelauslassanschlusses das vollständige Durchströmen des Stators mit dem Kühlmittel, sodass eine besonders effektive Kühlung erfolgt.

Eine weitere bevorzugte Ausführungsform der Erfindung sieht vor, dass die Statorkühlkanäle zwischen Statorzähnen des Stators angeordnet sind. Die Statorzähne erstrecken sich ausgehend von einem Innenumfang des Stators in radialer Richtung nach innen in Richtung des Rotors. Auf den Statorzähnen sind die Wicklungen beziehungsweise Windungen von elektrischen Spulen angeordnet, die der Erzeugung eines Magnetfelds in der elektrischen Maschine dienen. Die Statorkühlkanäle liegen in Umfangsrichtung zwischen den Statorzähnen des Stators vor. Beispielsweise werden die Statorkühlkanäle in Umfangsrichtung von den Statorzähnen wenigstens bereichsweise begrenzt.

Eine weitere Ausgestaltung der Erfindung sieht vor, dass die Statorkühlkanäle zwischen benachbarten Statorwicklungen des Stators vorliegen oder in den Statorwicklungen ausgebildet sind. Die Statorwicklungen umgreifen die Statorzähne des Stators beziehungsweise liegen zumindest in Umfangsrichtung gesehen zwischen den Statorzähnen vor. Bevorzugt werden die Statorkühlkanäle wenigstens bereichsweise von den Statorwicklungen begrenzt. Hierzu liegen sie zwischen benachbarten Statorwicklungen vor oder sind in den Statorwicklungen ausgebildet. Insoweit kann eine unmittelbare Kühlung auch der Statorwicklungen durch das Kühlmittel erfolgen.

Schließlich kann im Rahmen einer weiteren bevorzugten Ausgestaltung der Erfindung vorgesehen sein, dass die in den Statorwicklungen ausgebildeten Statorkühlkanäle als randoffene Vertiefungen in Wicklungsblechen der Statorwicklungen vorliegen, sodass benachbarte Wicklungsbleche jeweils wenigstens einen der Statorkühlkanäle im Querschnitt gesehen gemeinsam begrenzen. Die Statorwicklungen bestehen aus den Wicklungsblechen, welche lagenweise zueinander angeordnet sind.

In den Wicklungsblechen sind nun randoffene Vertiefungen ausgebildet, welche von einem jeweils benachbart angeordneten der Wicklungsbleche übergriffen ist. Insoweit begrenzen die benachbarten Wicklungsbleche den wenigstens einen der Statorkühlkanäle im Querschnitt gesehen gemeinsam. Dies ermöglicht zum einen eine besonders vorteilhafte Führung des Kühlmittels und zum anderen wird Wärme sehr effektiv aus den Statorwicklungen abgeführt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Längsschnittdarstellung einer elektrischen Maschine,
- Figur 2: eine schematische Teilquerschnittdarstellung der elektrischen Maschine in einer ersten Ausführungsform, sowie
- Figur 3: eine schematische Teilquerschnittdarstellung der elektrischen Maschine in einer zweiten Ausführungsform.

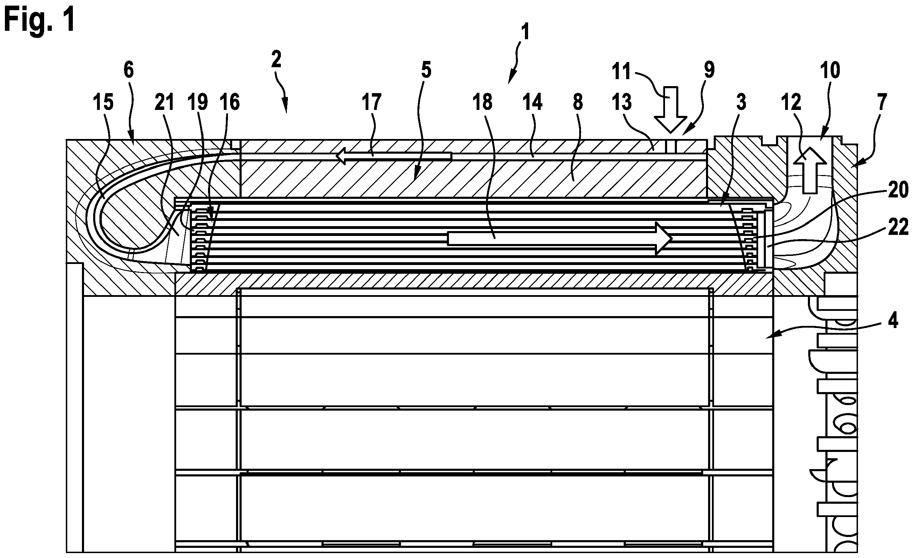

Die Figur 1 zeigt eine Längsschnittdarstellung durch eine elektrische Maschine 1, die ein Maschinengehäuse 2, einen in dem Maschinengehäuse 2 ortsfest angeordneten Stator 3 sowie einen bezüglich des Stators 3 um eine Drehachse drehbar gelagerten Rotor 4 aufweist. Das Maschinengehäuse 2 weist in dem hier dargestellten Ausführungsbeispiel ein erstes Gehäuseelement 5, ein zweites Gehäuseelement 6 sowie ein drittes Gehäuseelement 7 auf. Das erste Gehäuseelement 5 ist in axialer Richtung zwischen den Gehäuseelementen 6 und 7 angeordnet. Beispielsweise dienen die Gehäuseelemente 6 und 7 einer Halterung des Stators 3 in axialer Richtung und/oder in radialer Richtung. Das Maschinengehäuse 2 weist eine Gehäusewand 8 auf, welche sich über die drei Gehäuseelemente 5, 6 und 7 erstreckt. Jedes dieser Gehäuseelement 5, 6 und 7 bildet insoweit wenigstens einen Teil der Gehäusewand 8 aus.

Zur Kühlung der elektrischen Maschine 1 sind an dem Maschinengehäuse 2 ein Kühlmitteleinlassanschluss 9 und ein Kühlmittelauslassanschluss 10 ausgebildet. Der Kühlmitteleinlassanschluss 9 dient dem Zuführen von Kühlmittel in das Maschinengehäuse 2 und der Kühlmittelauslassanschluss 10 zum Abführen von Kühlmittel aus dem Maschinengehäuse 2. Das Zuführen des Kühlmittels ist durch den Pfeil 11, das Abführen durch den Pfeil 12 angedeutet. Der Kühlmitteleinlassanschluss 9 mündet in einem Verteilerringraum 13 ein, der den Stator 3 in Umfangsrichtung vollständig umgreift. Von dem Verteilerringraum 13 gehen mehrere Gehäusekühlkanäle 14 aus, die sich bis über ein axiales Ende des Stators 3 hinaus erstrecken, der in axialer Richtung weiter von dem Verteilerringraum 13 entfernt liegt als das jeweils andere axiale Ende.

Die Gehäusekühlkanäle 14 münden in Umlenkkanäle 15 ein, in welchem die Strömungsrichtung in axialer Richtung gesehen um 180° umgekehrt wird. Aus den Umlenkkanälen 15 gelangt das Kühlmittel in Statorkühlkanäle 16. Aufgrund der Umlenkung des Kühlmittels strömt dieses ausgehend von dem Verteilerringraum 13 gemäß dem Pfeil 17 durch die Gehäusekühlkanäle 14 und anschließend in die entgegengesetzte Richtung gemäß dem Pfeil 19 durch die Statorkühlkanäle 16. Das Kühlmittel tritt durch Statorkühlkanaleinlässe 19 in die Statorkühlkanäle 16 ein und an dem in axialer Richtung entgegengesetzten Ende durch Statorkühlkanalauslässe 20 aus ihm aus.

Strömungstechnisch zwischen dem Gehäusekühlkanal 14 und dem Statorkühlkanal 16, insbesondere zwischen dem Umlenkkanal 15 und dem Statorkühlkanal 16 kann ein Sammelraum 21 vorliegen, in welchem zunächst das Kühlmittel mehrerer oder aller Gehäusekühlkanäle 14 zusammengefasst und erst nachfolgend den Statorkühlkanälen 16 zugeführt wird. Stromabwärts der Statorkühlkanäle 16 sind diese über die Statorkühlkanalauslässe 20 an den Kühlmittelauslass 10 strömungstechnisch angeschlossen. Hierzu münden beispielsweise die Statorkühlkanäle 16 in einem Sammelringraum 22 ein, über welchen alle Statorkühlkanäle 16 mit dem Statorkühlkanalauslass 20 in Strömungsverbindung stehen.

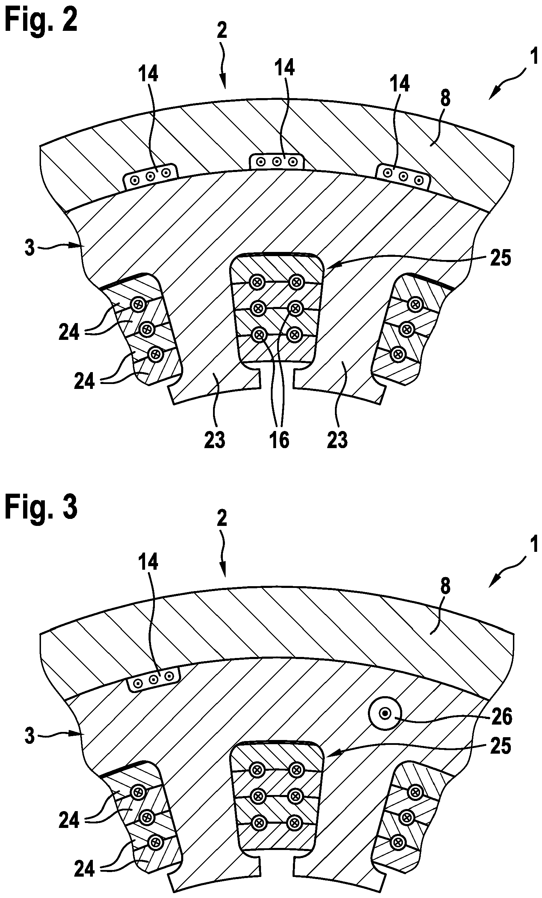

Die Figur 2 zeigt eine Teilquerschnittdarstellung der elektrischen Maschine 1 in einer ersten Ausführungsform. Es ist erkennbar, dass die Gehäusekühlkanäle 14 als Vertiefungen in der Gehäusewand 8 ausgebildet und von dem Stator 3 verschlossen sind. Die Gehäusekühlkanäle 14 werden insoweit gemeinsam von der Gehäusewand 8 und dem Stator 3 ausgebildet. Weiterhin ist erkennbar, dass die Statorkühlkanäle 16 zwischen Statorzähnen 23 des Stators 3 angeordnet sind. Dabei liegen sie zwischen Wicklungsblechen 24 einer Wicklung 25 vor. Die Statorkühlkanäle 16 sind als randoffene Vertiefungen in den Wicklungsblechen 24 ausgestaltet, sodass benachbarte Wicklungsbleche 24 jeweils wenigstens einen der Statorkühlkanäle 16 gemeinsam begrenzen.

Die Figur 3 zeigt eine Teilquerschnittdarstellung der elektrischen Maschine 1. Die zweite Ausführungsform entspricht im Wesentlichen der ersten Ausführungsform, sodass auf die vorstehenden Ausführungen hingewiesen und nachfolgend lediglich auf die Unterschiede eingegangen wird. Diese liegen darin, dass die Gehäusekühlkanäle 14 als randoffene Vertiefung in dem Stator 3 ausgebildet sind, welche von der Gehäusewand 8 verschlossen werden. Zusätzlich kann ein weiterer Gehäusekühlkanal 26 vorgesehen sein, welcher vollständig in dem Stator 3 vorliegt, im Querschnitt also randgeschlossen in diesem ausgebildet ist. Bei einer derartigen Ausgestaltung des Gehäusekühlkanals 26 ist der Stator 3 wärmeübertragend an das Maschinengehäuse 2 beziehungsweise die Gehäusewand 8 angeschlossen, sodass eine effektive Kühlung des Maschinengehäuses 2 sichergestellt ist.

Die beschriebene Ausgestaltung der elektrischen Maschine 1 ermöglicht eine besonders effektive Kühlung sowohl des Maschinengehäuses 2 als auch des Stators 3. Hierbei ist es insbesondere vorgesehen, dass die von dem Verteilerringraum 13 ausgehenden Gehäusekühlkanäle 14 unterschiedliche Strömungswiderstände aufweisen, welche von einem strömungstechnischen Abstand des jeweiligen Gehäusekühlkanals 14 von dem Kühlmitteleinlassanschluss 9 abhängt. Insoweit kann ein hydraulischer Abgleich zwischen den Gehäusekühlkanälen 14 realisiert sein, sodass diese bei gegebenem Massenstrom durch den Kühlmitteleinlassanschluss 9 jeweils von demselben Kühlmittelmassenstrom durchströmt werden. Dies hat eine besonders gleichmäßige Kühlung des Maschinengehäuses 2 zur Folge, welche thermische Spannungen vermeidet.

## Patentansprüche

1. Elektrische Maschine (1) mit einem in einem Maschinengehäuse (2) angeordneten Stator (3) und einem bezüglich des Stators (3) um eine Drehachse drehbar gelagerten Rotor (4), wobei das Maschinengehäuse (2) wenigstens einen Kühlmitteleinlassanschluss (9) zum Zuführen von Kühlmittel in das Maschinengehäuse (2) und wenigstens einen Kühlmittelauslassanschluss (10) zum Abführen von Kühlmittel aus dem Maschinengehäuse (2) aufweist, wobei der Kühlmitteleinlassanschluss (9) in einen Verteilerringraum (13) einmündet und von dem Verteilerringraum (13) mehrere Gehäusekühlkanäle (14) ausgehen, die sich in axialer Richtung gesehen über den Stator (3) hinaus erstrecken und auf ihrer dem Verteilerringraum (13) abgewandten Seite strömungstechnisch an Statorkühlkanaleinlässe (19) von in dem Stator (3) ausgebildeten Statorkühlkanälen (16) angeschlossen sind, die den Stator (3) in axialer Richtung vollständig durchgreifen und auf ihrer den Statorkühlkanaleinlässen (19) abgewandten Seite über Statorkühlkanalauslässe (20) an den Kühlmittelauslassanschluss (10) angeschlossen sind, wobei die Gehäusekühlkanäle (14) unterschiedliche Strömungswiderstände aufweisen, sodass das Kühlmittel gleichmäßig oder zumindest nahezu gleichmäßig auf die Gehäusekühlkanäle (14) aufgeteilt wird.

2. Elektrische Maschine nach Anspruch 1, **dadurch gekennzeichnet, dass** der Verteilerringraum (13) in einer Gehäusewand (8) des Maschinengehäuses (2) ausgebildet oder von der Gehäusewand (8) begrenzt ist, und/oder dass die Gehäusekühlkanäle (14) in der Gehäusewand (8) ausgebildet oder von der Gehäusewand (8) begrenzt sind.

3. Elektrische Maschine nach einem der vorhergehenden Ansprüche, **dadurch gekennzeichnet, dass** der Verteilerringraum (13) in Umfangsrichtung durchgehend ausgebildet ist und die Gehäusekühlkanäle (14) über den Umfang des Gehäuses (2) gleichmäßig verteilt aus dem Verteilerringraum (13) ausmünden.

4. Elektrische Maschine nach einem der vorhergehenden Ansprüche, **dadurch gekennzeichnet, dass** die Gehäusekühlkanäle (14) auf ihrer dem Verteilerringraum (13) abgewandten Seite in einen Sammelraum (21) einmünden, von dem die Statorkühlkanäle (16) ausgehen, oder dass jeder der Gehäusekühlkanäle (14) von den anderen Gehäusekühlkanälen (14) strömungstechnisch separat mit einem der Statorkühlkanäle (16) strömungstechnisch verbunden ist.

5. Elektrische Maschine nach einem der vorhergehenden Ansprüche, **dadurch gekennzeichnet, dass** die Gehäusekühlkanäle (14) von der Gehäusewand (8) und einem Außenumfang des Stators (3) gemeinsam begrenzt sind.

6. Elektrische Maschine nach einem der vorhergehenden Ansprüche, **dadurch gekennzeichnet, dass** der Verteilerringraum (13) in axialer Richtung gesehen in Überdeckung mit dem Stator (3) angeordnet ist.

7. Elektrische Maschine nach einem der vorhergehenden Ansprüche, **dadurch gekennzeichnet, dass** der Kühlmittelauslassanschluss (10) in axialer Richtung gesehen auf der den Statorkühlkanaleinlässen (19) abgewandten Seite des Stators (3) vorliegt.

8. Elektrische Maschine nach einem der vorhergehenden Ansprüche, **dadurch gekennzeichnet, dass** die Statorkühlkanäle (16) zwischen Statorzähnen (23) des Stators (3) angeordnet sind.

9. Elektrische Maschine nach einem der vorhergehenden Ansprüche, **dadurch gekennzeichnet, dass** die Statorkühlkanäle (16) zwischen benachbarten Statorwicklungen des Stators (3) vorliegen oder in den Statorwicklungen ausgebildet sind.

10. Elektrische Maschine nach einem der vorhergehenden Ansprüche, **dadurch gekennzeichnet, dass** die in den Statorwicklungen ausgebildeten Statorkühlkanäle (16) als randoffene Vertiefungen in Wicklungsblechen (24) der Statorwicklungen vorliegen, sodass benachbarte Wicklungsbleche (24) jeweils wenigstens einen der Statorkühlkanäle (16) im Querschnitt gesehen gemeinsam begrenzen.

## Claims

1. Electric machine (1) comprising a stator (3) arranged in a machine housing (2) and a rotor (4) mounted rotatably relative to the stator (3) about an axis of rotation, wherein the machine housing (2) comprises at least one coolant inlet port (9) for supplying coolant to the machine housing (2) and at least one coolant outlet port (10) for draining coolant from the machine housing (2), wherein the coolant inlet port (9) empties into a distribution annulus (13), and several housing coolant ducts (14) emerge from the distribution annulus (13) and extend beyond the stator (3), when viewed in axial direction, and are connected fluidically, on their side facing away from the distribution annulus (13), to stator cooling duct inlets (19) of stator cooling ducts (16) formed in the stator (3), which pass entirely through the stator (3) in the axial direction and are connected, on their side facing away from the stator cooling duct inlets (19), to the coolant outlet port (10) by way of stator cooling duct outlets (20), wherein the housing cooling ducts (14) have different flow resistances so that the coolant is distributed evenly or at least almost evenly to the housing cooling ducts (14).

2. Electric machine according to claim 1, **characterised in that** the distribution annulus (13) is formed in a housing wall (8) of the machine housing (2) or is delimited by the housing wall (8), and/or **in that** the housing coolant ducts (14) are formed in the housing wall (8) or are delimited by the housing wall (8).

3. Electric machine according to any of the preceding claims, **characterised in that** the distribution annulus (13) is formed continuously in the peripheral direction, and the housing coolant ducts (14) emerge from the distribution annulus (13), distributed evenly over the periphery of the housing (2).

4. Electric machine according to any of the preceding claims, **characterised in that** on their side facing away from the distribution annulus (13), the housing coolant ducts (14) empty into a collecting space (21) from which the stator cooling ducts (16) emerge, or **in that** each of the housing coolant ducts (14) is joined fluidically to one of the stator cooling ducts (16), separately from the other housing coolant ducts (14).

5. Electric machine according to any of the preceding claims, **characterised in that** the housing coolant ducts (14) are delimited jointly by the housing wall (8) and an outer periphery of the stator (3).

6. Electric machine according to any of the preceding claims, **characterised in that** the distribution annulus (13) is arranged to overlap with the stator (3), when viewed in axial direction.

7. Electric machine according to any of the preceding claims, **characterised in that** the coolant outlet port (10) is provided on the side of the stator (3) facing away from the stator cooling duct inlets (19), when viewed in axial direction.

8. Electric machine according to any of the preceding claims, **characterised in that** the stator cooling ducts (16) are arranged between stator teeth (23) of the stator (3).

9. Electric machine according to any of the preceding claims, **characterised in that** the stator cooling ducts (16) are provided between adjacent windings of the stator (3) or are formed in the stator windings.

10. Electric machine according to any of the preceding claims, **characterised in that** the stator cooling ducts (16), which are formed in the stator windings, are provided as recesses open at the edge in winding plates (24) of the stator windings, so that adjacent winding plates (24) jointly delimit at least one of the stator cooling ducts (16) respectively, when viewed in cross-section.

## Revendications

1. Machine électrique (1) avec un stator (3) agencé dans un boîtier de machine (2) et un rotor (4) monté pivotant autour d'un axe de rotation par rapport au stator (3), dans lequel le boîtier de machine (2) présente au moins un raccord d'entrée de moyen de refroidissement (9) pour l'alimentation du moyen de refroidissement dans le boîtier de machine (2) et au moins un raccord de sortie de moyen de refroidissement (10) pour l'évacuation du moyen de refroidissement hors du boîtier de machine (2),
dans lequel le raccord d'entrée de moyen de refroidissement (9) se débouche dans un espace annulaire de distributeur (13) et plusieurs canaux de refroidissement de boîtier (14) partent de l'espace annulaire de distributeur (13), lesquels s'étendent, vus en direction axiale, au-delà du stator (3) et sont raccordés selon la technique des fluides sur leur côté détourné de l'espace annulaire de distributeur (13) aux entrées de canal de refroidissement de stator (19) de canaux de refroidissement de stator (16) formés dans le stator (3), qui passent complètement à travers le stator (3) en direction axiale et sont raccordés, sur leur côté détourné des entrées de canal de refroidissement de stator (19), via des sorties de canal de refroidissement de stator (20), au raccord de sortie de moyen de refroidissement (10), dans lequel les canaux de refroidissement de boîtier (14) présentent différentes résistances à l'écoulement, de sorte que le moyen de refroidissement soit réparti de façon uniforme ou au moins de façon presque uniforme sur les canaux de refroidissement de boîtier (14).

2. Machine électrique selon la revendication 1, **caractérisée en ce que** l'espace annulaire de distributeur (13) est formé dans une paroi de boîtier (8) du boîtier de machine (2) ou est délimité par la paroi de boîtier (8), et/ou **en ce que** les canaux de refroidissement de boîtier (14) sont formés dans la paroi de boîtier (8) ou sont délimités par la paroi de boîtier (8).

3. Machine électrique selon l'une quelconque des revendications précédentes, **caractérisée en ce que** l'espace annulaire de distributeur (13) est formé de manière continue dans une direction circonférentielle et les canaux de refroidissement de boîtier (14) débouchent sur la périphérie du boîtier (2) de façon uniformément répartie en dehors de l'espace annulaire de distributeur (13).

4. Machine électrique selon l'une quelconque des revendications précédentes, **caractérisée en ce que** les canaux de refroidissement de boîtier (14) débouchent au niveau de leur côté détourné de l'espace annulaire de distributeur (13) dans un espace de collecte (21), duquel sortent les canaux de refroidissement de stator (16), ou **en ce que** chacun des canaux de refroidissement de boîtier (14), séparés selon la technique des fluides des autres canaux de refroidissement de boîtier (14), est lié avec l'un des canaux de refroidissement de stator (16) selon la technique des fluides.

5. Machine électrique selon l'une quelconque des revendications précédentes, **caractérisée en ce que** les canaux de refroidissement de boîtier (14) sont délimités de manière commune de la paroi de boîtier (8) et d'une périphérie externe du stator (3).

6. Machine électrique selon l'une quelconque des revendications précédentes, **caractérisée en ce que** l'espace annulaire de distributeur (13) est agencé, vu en direction axiale, en coïncidence avec le stator (3).

7. Machine électrique selon l'une quelconque des revendications précédentes, **caractérisée en ce que** le raccord de sortie de moyen de refroidissement (10) se trouve, en observant en direction axiale, sur le côté du stator (3) détourné des entrées de canal de refroidissement de stator (19).

8. Machine électrique selon l'une quelconque des revendications précédentes, **caractérisée en ce que** les canaux de refroidissement de stator (16) sont agencés entre les dents de stator (23) du stator (3).

9. Machine électrique selon l'une quelconque des revendications précédentes, **caractérisée en ce que** les canaux de refroidissement de stator (16) se trouvent entre des bobinages de stator voisines du stator (3) ou sont formées dans les bobinages de stator.

10. Machine électrique selon l'une quelconque des revendications précédentes, **caractérisée en ce que** les canaux de refroidissement de stator (16) formés dans les bobinages de stator se trouvent sous la forme de renfoncements de bords ouverts dans des tôles de bobinage (24) des bobinages de stator, de sorte que des tôles de bobinage (24) voisines délimitent de manière commune respectivement au moins un des canaux de refroidissement de stator (16), vu en section transversale.
